# EUROPÄISCHE PATENTSCHRIFT

(11) **EP 1 827 172 B1**
(45) Veröffentlichungstag und Bekanntmachung des Hinweises auf die Patenterteilung: **29.04.2009**
(21) Anmeldenummer: 05816190.2
(22) Anmeldetag: 09.12.2005
(51) Int. Cl.: A47B 88/08

(54) **TELESKOPFÜHRUNGSSCHIENE FÜR MÖBELAUSZÜGE**
TELESCOPIC GUIDE RAIL FOR FURNITURE DRAWERS
RAIL DE GUIDAGE TELESCOPIQUE POUR TIROIR DE MEUBLE

(30) Priorität: 14.12.2004 DE 202004019219 U
(43) Veröffentlichungstag der Anmeldung: 05.09.2007
(73) Patentinhaber: Hettich-Heinze GmbH & Co. KG, 32139 Spenge (DE)
(72) Erfinder: AMON, Michael, Rene, 32469 Petershagen (DE); REINERT, Matthias, 32257 Löhne (DE); KARRASCH, Thorsten, 32049 Herford (DE)
(74) Vertreter: Dantz, Jan Henning
(86) Internationale Anmeldenummer: PCT/EP2005/056647
(87) Internationale Veröffentlichungsnummer: WO 2006/063968

(56) Entgegenhaltungen:
- DE-U1- 20 318 735
- GB-A- 2 237 501
- US-A- 4 912 727

## Beschreibung

Die vorliegende Erfindung betrifft eine Teleskopführungsschiene für Möbelauszüge, umfassend eine an einem Möbelkorpus festlegbare Korpusschiene, eine auszugsseitig festlegbare Auszugsschiene und mindestens eine zwischen Korpusschiene und Auszugsschiene angeordnete Mittelschiene, wobei die Auszugsschiene mit der Mittelschiene bis zu deren maximalem oder nahezu maximalem Verschiebeweg gegenüber der Korpusschiene gekoppelt ist.

Teleskopführungsschienen der vorerwähnten Art sind an sich bekannt.

So ist aus der DE 203 18 735 U1 eine entsprechende Teleskopführungsschiene bekannt, bei der die Kopplung zwischen Mittelschiene und Auszugsschiene rein mechanisch über einen Mitnehmerhebel erfolgt, der über eine an der Korpusschiene angebrachte Führungseinrichtung steuerbar ist.

Grundsätzlich ist mit einer derartigen, mechanischen Kopplung das angestrebte Ziel, nämlich einen bestimmten Lauf der Schienen beim Ausziehen eines Möbelauszugsteiles zu erzwingen, erreichbar, allerdings ist eine derartige, rein mechanische Kopplung aber auch mit gewissen Einschränkungen behaftet.

So setzt z. B. die Verwendung mechanischer Kopplungsmittel das Vorhandensein ausreichender Platzverhältnisse voraus, das heißt, dass mechanische Kopplungsmittel nur bei bestimmten Schienen- Querschnittsformen möglich sind.

Bei mechanischen Kopplungsmitteln erfolgt die Steuerung der Führungsschienen wegabhängig, das heißt, sobald die Mittelschiene maximal ausgefahren ist, ist auch die Kopplung zwischen der Mittelschiene und der Auszugsschiene aufgehoben und die Auszugsschiene kann somit ohne weiteres ausgefahren werden.

Umgekehrt ist für erneute Kopplung der entsprechenden Schienen die Überwindung einer gewissen Kraft erforderlich, die z. B. den Einzugskräften einer gegebenenfalls vorhandenen Selbsteinzugs- und Dämpfungsvorrichtung entgegenwirkt.

Der vorliegenden Erfindung liegt die Aufgabe zugrunde, eine Teleskoprührungsschiene der gattungsgemäßen Art mit einer besonders einfach realisierbaren und störunanfälligen und dabei kraftabhängig wirkenden Kopplung zu schaffen, die darüber hinaus die Funktion einer Selbsteinzugs- und Dämpfungsvorrichtung in keiner Weise stört.

Diese Aufgabe wird erfindungsgemäß dadurch gelöst, dass zur Kopplung der Mittelschiene mit der Auszugsschiene an einer der Schienen mindestens ein Permanentmagnet befestigt ist, der bis zur maximalen oder nahezu maximalen Auszugsposition der Mittelschiene an einem aus einem magnetisierbaren Material bestehenden Gegenlager der anderen Schiene anliegt.

Durch die Kopplung von Mittelschiene und Auszugsschiene über mindestens einen Permanentmagneten wird eine einfache und störunanfällige Kopplung der beiden Schienen miteinander verwirklicht. Diese Kopplung ist rein kraftabhängig, was dazu führt, dass nach dem vollständigen Ausziehen der Mittelschiene zunächst noch mal eine zusätzliche Kraft aufgebracht werden muss, um die Auszugsschiene von der Mittelschiene zu lösen unter Überwindung der Haltekräfte des mindestens einen Permanentmagneten.

Andererseits wird eine gegebenenfalls an der Teleskopführungsschiene integrierte Selbsteinzugs- und Dämpfungseinrichtung durch die Kopplung nicht beeinträchtigt, sondern im Gegenteil noch unterstützt, da kurz vor Erreichen der Schließstellung die Kräfte des mindestens einen Permanentmagneten, den Selbsteinzug fördern.

Durch die Wahl unterschiedlich starker Permanentmagneten kann bei Bedarf auch die Haltekraft bei teilweise ausgezogener Teleskopführungsschiene erhöht werden, was auch durch die Verwendung von mehreren Permanentmagneten erreicht werden kann.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: eine schematisch dargestellte Stirnansicht des unteren Bereiches eines in Teleskopführungsschienen geführten Möbelauszuges
- Figur 2: eine perspektivische Sprengbilddarstellung der Teleskopführungsschienen und eine daran anbringbare Einrichtung zur Kopplung zweier Schienen
- Figur 3: eine perspektivische Sprengbilddarstellung der Einrichtung zur Kopplung von Schienen der Teleskopführungsschienen gemäß Figur 2
- Figur 4: eine Ansicht in Richtung des Pfeiles IV in Figur 2
- Figur 5: einen Schnitt nach der Linie V - V in Figur 4
- Figuren 6a bis 6g: verschiedene Ansichten und Schnittdarstellungen einer Magnethalterung der Einrichtung gemäß Figur 3
- Figur 7: eine im wesentlichen der Figur 1 entsprechenden Stirnansicht nach einem weiteren Ausführungsbeispiel der Erfindung
- Figur 8: eine perspektivische Sprengbilddarstellung einer Einrichtung zur Kopplung von Schienen der Teleskopführungsschienen gemäß Figur 7
- Figur 9: eine der Figur 7 entsprechende Stirnansicht mit angebrachter Einrichtung zur Kopplung von einzelnen Schienen
- Figur 10: einen Schnitt nach der Linie X - X in Figur 9
- Figuren 11a bis 11g: verschiedenen Ansichten bzw. Schnittdarstellungen einer Magnethalterung gemäß dem Ausführungsbeispiel nach den Figuren 7 bis 10
- Figur 12: eine der Figur 2 entsprechende Sprengbilddarstellung nach einem weiteren Ausführungsbeispiel der Erfindung
- Figur 13: eine perspektivische Teildarstellung nach dem Zusammenbau der in Figur 12 gezeigten Baugruppen
- Figuren 14a bis 14e: verschiedene Ansichten bzw. Schnittdarstellungen eines Magnethalters nach dem Ausführungsbeispiel gemäß den Figuren 12 und 13
- Figur 15: eine perspektivische Sprengbilddarstellung einer Teleskopführungsschiene für Schubkästen mit einer Einrichtung zur Kopplung zweier Schienen
- Figur 16: eine perspektivische Darstellung nach dem Zusammenfügen der in Figur 15 gezeigten Baugruppen
- Figuren 17a u. 17b: perspektivische Teildarstellungen der Teleskopführungsschiene nach Figur 16 in verschiedenen Auszugspositionen
- Figuren 18a bis 18e: verschiedenen Ansichten bzw. Schnittdarstellungen der Magnethalterung gemäß dem Ausführungsbeispiel nach den Figuren 15 bis 17
- Figuren 19 bis 22: Querschnittsformen verschiedener Teleskopführungsschienen, die für eine kraftabhängige Kopplung einzelner Schienen über Permanentmagnete geeignet sind

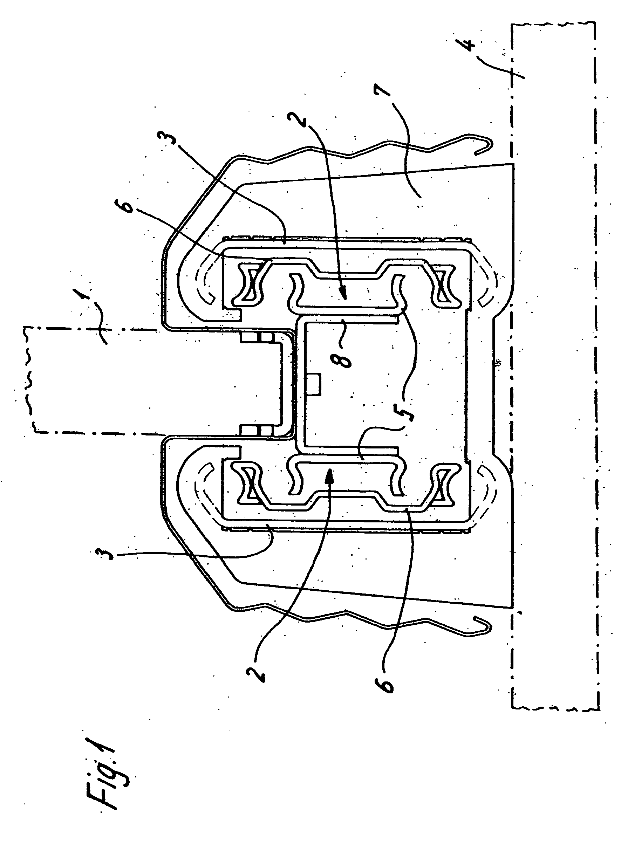

In Figur 1 ist mit dem Bezugszeichen 1 ein Schiebeelement eines Möbels bezeichnet, beispielsweise ein Schiebeelement eines Hochauszuges. Diese Schiebeelement 1 ist in seinem gezeigten unteren Endbereich über Teleskopführungsschienen 2 längsverschiebbar geführt.

Jede Teleskopführungsschiene 2 umfasst eine an einem Möbelkorpus, beispielsweise am Boden 4 eines Möbelkorpus festlegbare Korpusschiene 3, eine auszugsseitig -das heißt, am Schiebeelement 1- festlegbare Auszugsschiene 5 sowie eine zwischen der Korpusschiene 3 und der Auszugschiene 5 angeordnete Mittelschiene 6.

Die Korpusschienen 3 sind indirekt über einen Halteblock 7 mit dem Möbelkorpus -hier dem Boden 4- verbunden.

Die Auszugsschienen 5 sind an einem U-Profil 8 befestigt, welches seinerseits fest mit dem Schiebeelement 1 verbunden ist.

Daraus ergibt sich, dass die Korpusschienen 3 gegenüber dem Möbelkorpus ortsfest sind, während die Auszugsschienen 5 bezogen auf das Schiebeelement 1 als ortsfest betrachtet werden können, während die Mittelschienen 6 sowohl gegenüber dem Möbelkorpus wie auch gegenüber dem Schiebeelement 1 verschiebbar sind.

Die Gesamtauszugslänge der Teleskopführungsschienen ergibt sich somit aus dem maximalen Verschiebeweg der Mittelschiene 6 gegenüber dem Möbelkorpus und dem maximalen Verschiebeweg der Auszugsschiene 5 gegenüber der Mittelschiene 6.

Dieser grundsätzliche Aufbau und die soeben beschriebene Funktion derartiger Teleskopführungsschienen 2 ist an sich bekannt.

Es ist auch bekannt, dass die Auszugsschienen 5 gegenüber der Mittelschienen 6 gekoppelt sind derart, dass -aus einer eingeschobenen oder Schließstellung des Schiebeelementes 1 heraus- beim Öffnungsvorgang oder beim Herausziehen des Schiebeelementes 1 zunächst nur der mögliche Verschiebeweg der Mittelschiene 6 genutzt wird und über diesen Verschiebebcreich hinweg keine Relativverschiebung zwischen Mittelschiene 6 und Auszugsschiene 5 stattfindet.

Dies ist auch bei der vorliegenden Erfindung realisiert.

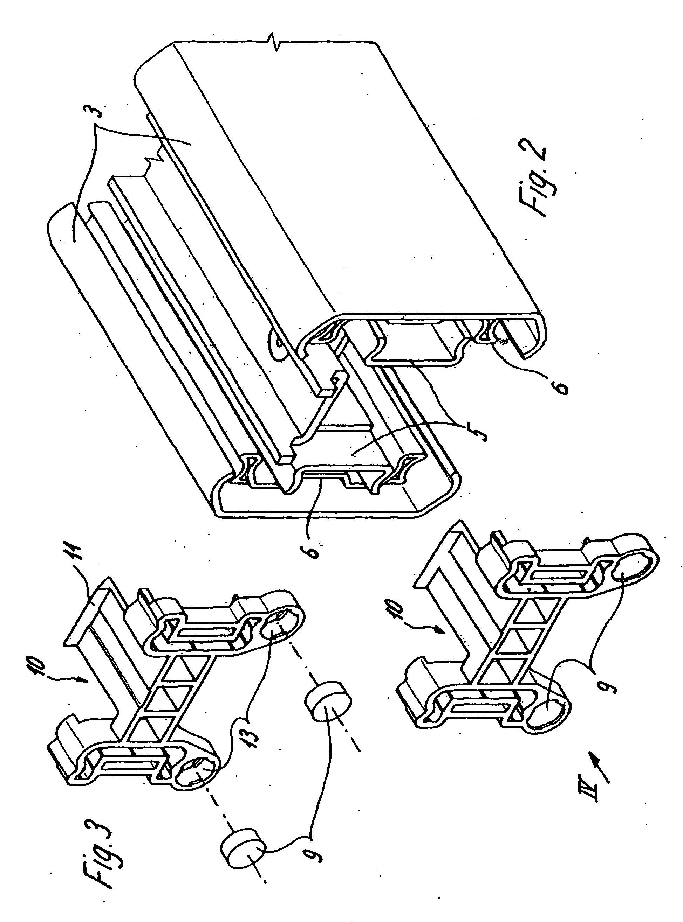

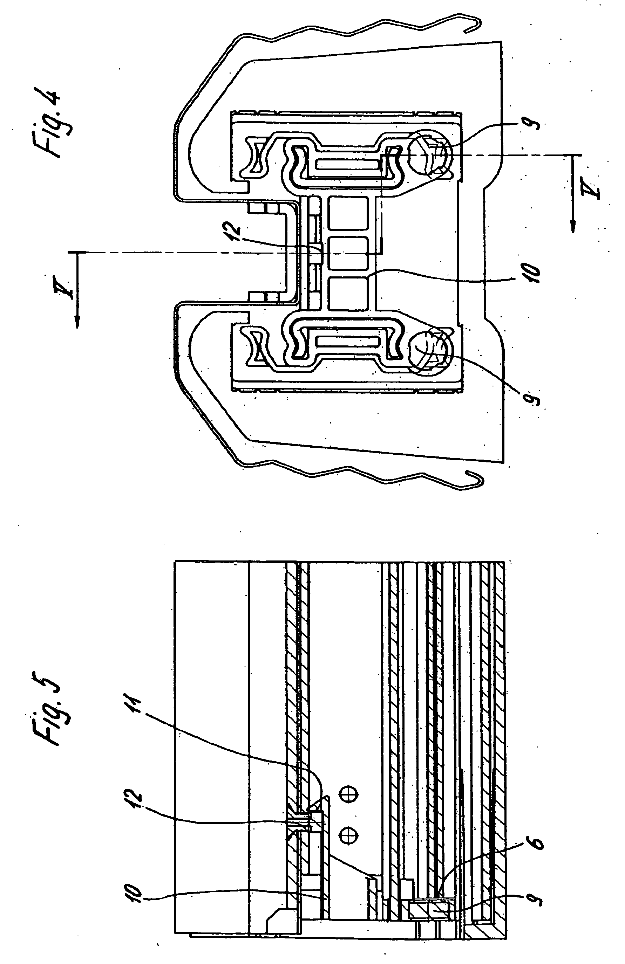

Um die Mittelschiene 6 mit der Auszugsschiene 5 im Sinne der vorstehend beschriebenen Funktion zu koppeln, sind, was aus den Figuren 2 bis 5 besonders anschaulich hervorgeht, Permanentmagnete 9 vorgesehen, welche von einer Magnethalterung 10 gehalten und im dargestellten Ausführungsbeispiel an den die beiden Auszugsschienen 5 tragenden U-Profil 8 befestigt sind. Diese Permanentmagnete 9 liegen im Schließzustand des Schiebeelementes 1 an den stirnseitigen Enden der aus einem magnetisierbaren Material hergestellten Mittelschienen 6 an. Dies ergibt sich insbesondere aus der Schnittdarstellung gemäß Figur 5.

Im Schließzustand sind also die Mittelschienen 6 mit den Auszugsschienen 5 durch die Kräfte der Permanentmagneten 9 kraftabhängig gekoppelt.

Wird das Schiebeelement 1 aus seiner Schließstellung herausgezogen, so bewegen sich zunächst nur die Mittelschienen 6 relativ zu den Korpusschienen 3. Ist der maximale Verschiebeweg der Mittelschienen 6 aufgebraucht, kommt es zunächst zu einem kurzen Stop, da zum weiteren Ausziehen des Schiebeelementes 1 die kraftabhängige Kopplung zwischen den Auszugsschienen 5 und den Mittelschienen 6 durch die Permanentmagnete 9 überwunden werden muss.

Durch diese Konstruktion ist auf einfachste Art und Weise sicher gestellt, dass beim Öffnen oder Herausziehen eines Möbelauszuges aus seiner Schließstellung heraus zunächst nur die Mittelschienen 6 -und zwar gleichmäßig- aus dem Möbelkorpus herausgezogen werden. Erst dann, wenn ein weiterer Auszug gewünscht wird, wird durch den Benutzer die kraftabhängige Kopplung zwischen den Auszugsschienen 5 und den Mittelschienen 6 überwunden und ein Maximalauszug herbeigeführt.

Wird ein entsprechendes Schiebeelement wieder in seine Schließstellung zurückgeschoben, kommt es kurz vor Erreichen des endgültigen Schließzustandes zur erneuten Kopplung der Permanentmagneten 9 mit den Mittelschicnen 6, wobei hier die entsprechenden Magnetkräfte eine Art Selbsteinzug des Schiebeelementes bewirken oder unterstützen, sofern im Bereich der Führung Selbsteinzugs- und Dämpfungsvorrichtungen Verwendung finden.

Es versteht sich, dass durch die Wahl unterschiedlich starker Permanentmagneten 9 die Kräfte zur Kopplung zwischen den Mittelschienen 6 und den Auszugsschienen 5 höher oder niedriger eingestellt werden können.

Die Magnethalterung 10 wird in den Bereich des U-Profiles 8 stirnseitig eingeschoben und axial fixiert durch eine Rastnase 11, welche einen am U-Profil 8 vorgesehenen Nocken 12 hintergreift, was insbesondere wiederum aus Figur 5 besonders deutlich hervorgeht.

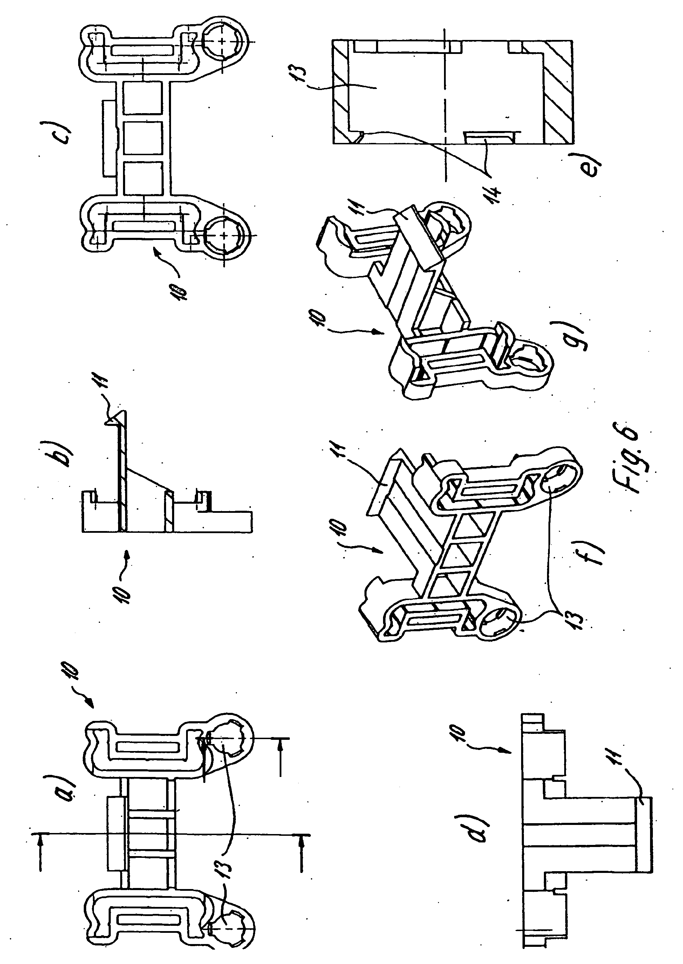

Die Detaildarstellungen der Figuren 6a bis 6g machen deutlich, dass der Magnethalter 10 mit Aufnahmekammern 13 für die Permanentmagneten 9 ausgestattet ist, wobei die Permanentmagneten 9 wieder in diese Aufnahmekammern 13 eingeklipst und durch Rastvorsprünge 14 gesichert werden.

Sofern die Mittelschienen 6 selbst nicht aus einem magnetisierbaren Material gefertigt sind, müssen an den entsprechenden Stirnseiten -zumindest in dem den Permanentmagneten 9 gegenüber liegenden Bereich- aus einem magnetisierbaren Material bestehende Auflager angebracht sein.

Dies ist beispielsweise dann erforderlich, wenn die Mittelschienen 6 aus Kunststoff oder einem selbst nicht magnetisierbaren Metall gefertigt sind.

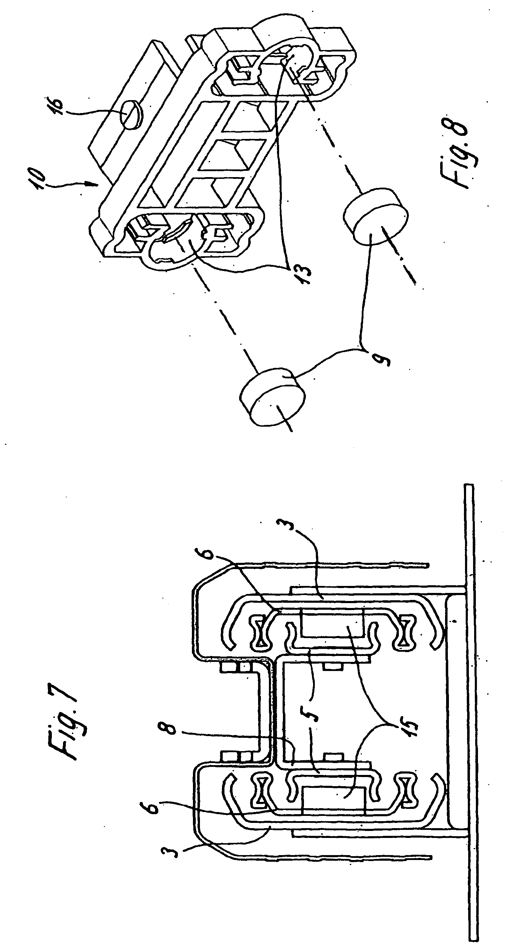

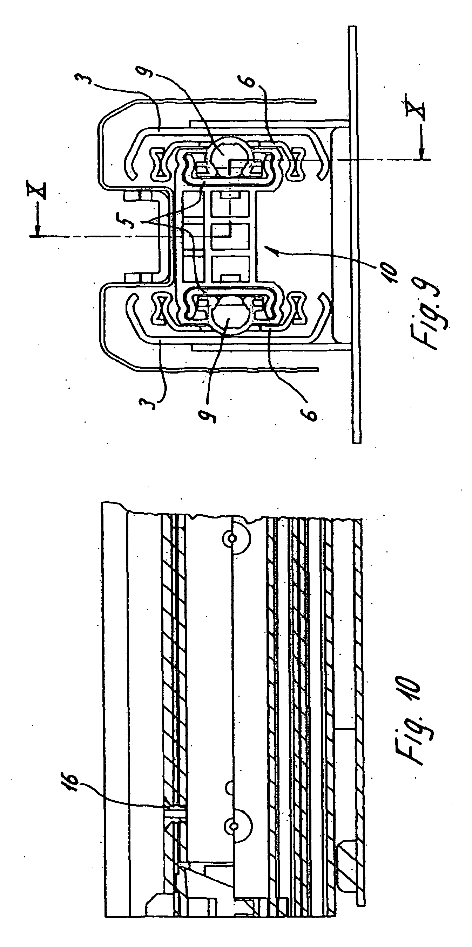

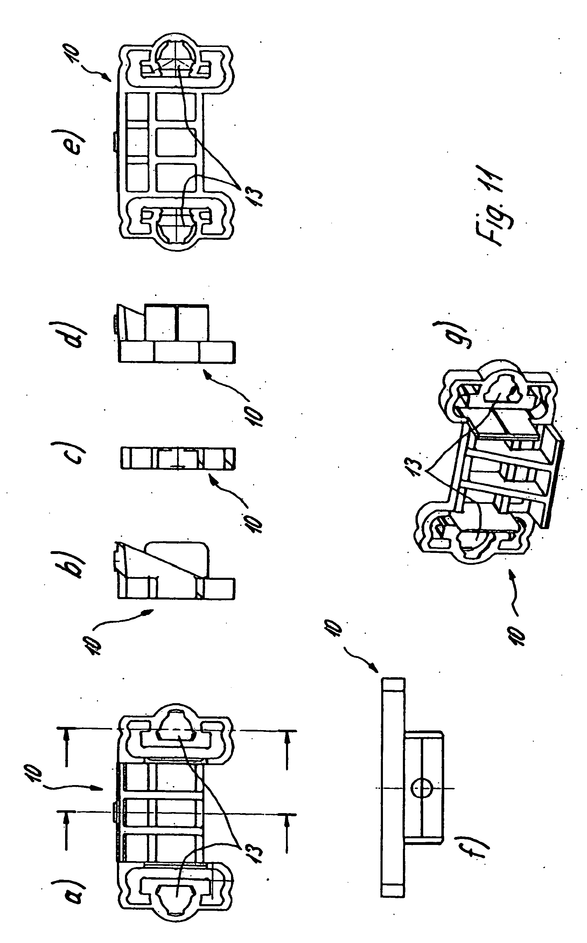

In den Figuren 7 bis 11 ist ein Ausführungsbeispiel der Erfindung gezeigt, bei dem die Permanentmagneten 9 mit Laschen 15 zusammenwirken, die an den Mittelschienen 6 angebracht sind oder, sofern diese Mittelschienen 6 aus einem magnetisierbaren Material hergestellt sind, aus diesen Mittelschienen 6 heraus ausgestellt sind. Beim Ausführungsbeispiel gemäß den Figuren 7 bis 11 kann der dem auch hier dem Führungsschienen-Querschnitt angepasste Magnethalter 10 über eine Schraube oder ein Niet 16 am U-Profil 8 befestigt werden.

Ansonsten sind Aufbau und Wirkungsweise der in diesem Ausführungsbeispiel nach den Figuren 7 bis 11 gezeigten Konstruktion identisch mit dem zuvor beschriebenen Ausführungsbeispiel, wobei hier jedoch die Permanentmagnete 9 im Mittelbereich der Führungsschiene angeordnet sind.

Die Kopplung der Auszugsschienen 5 mit den Mittelschienen 6 kann sowohl im vorderen Stirnseitenbereich wie auch im rückseitigen oder mittleren Bereich dieser Schienen-Paarung erfolgen, hier wird der Konstrukteur die jeweils geeignete und im Gesamtkonzept am besten angepasste Lage wählen.

Bei den bislang beschriebenen Ausführungsbeispielen erfolgt die Kopplung zwischen den Auszugsschienen 5 und den Mittelschienen 6 jeweils über einen Permanentmagnet 9.

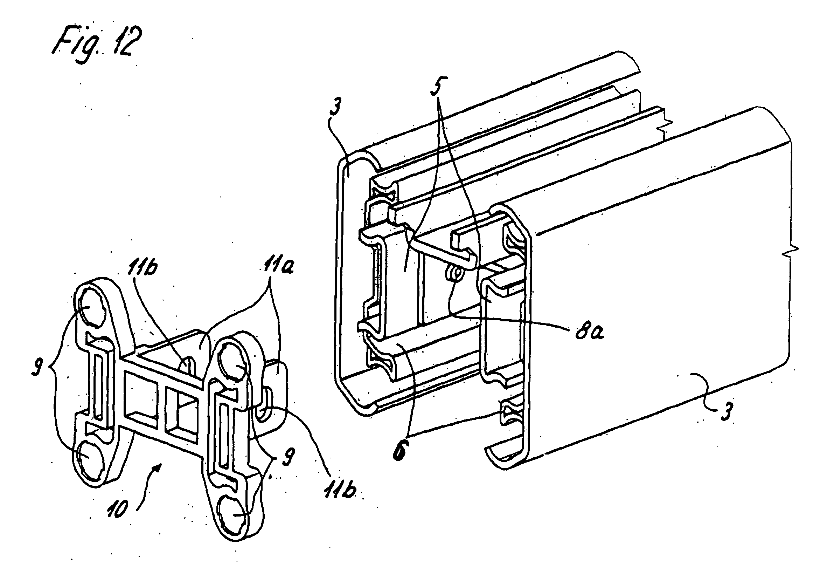

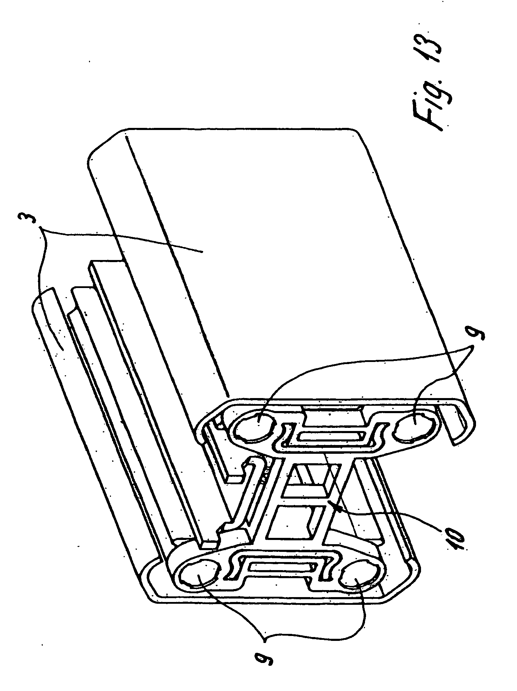

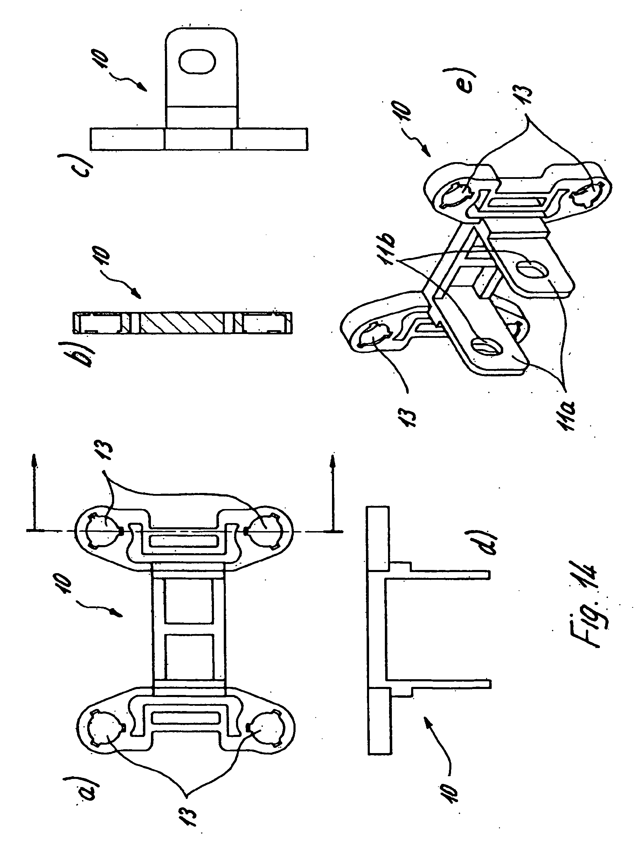

Beim Ausführungsbeispiel nach den Figuren 12 bis 14 ist gezeigt, dass auch jeweils zwei Permanentmagnete 9 zur Kopplung der Mittelschienen 6 mit den Auszugsschienen 5 zu realisieren mit dem Ergebnis höherer Haltekräfte.

Die Befestigung der Magnethalterung 10 erfolgt hier durch zwei vertikal verlaufende, einander gegenüberliegende Haltelaschen 11a mit Langlöchern 11b, in die führungsseitige bzw. U-profilseitige (8) Nocken 8a einer Klipsbefestigung einrasten.

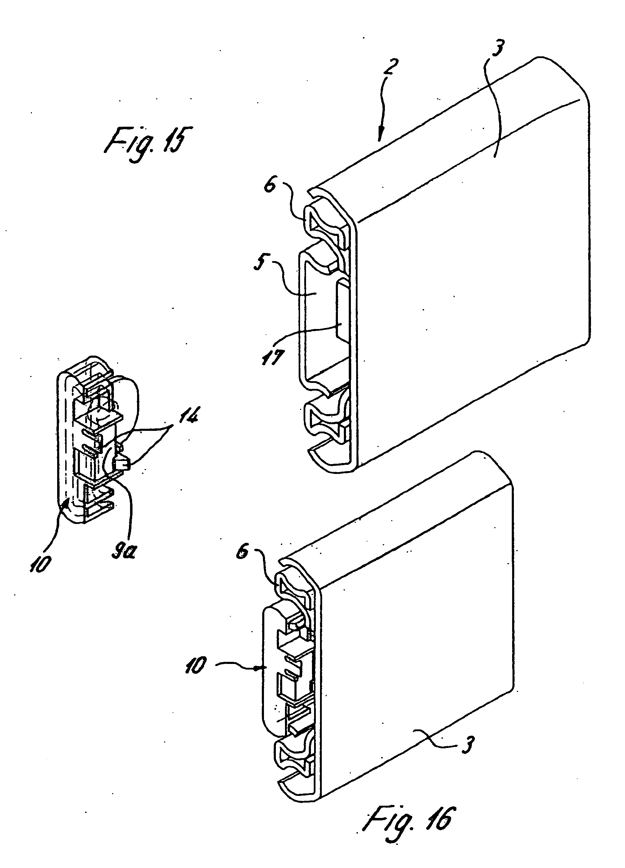

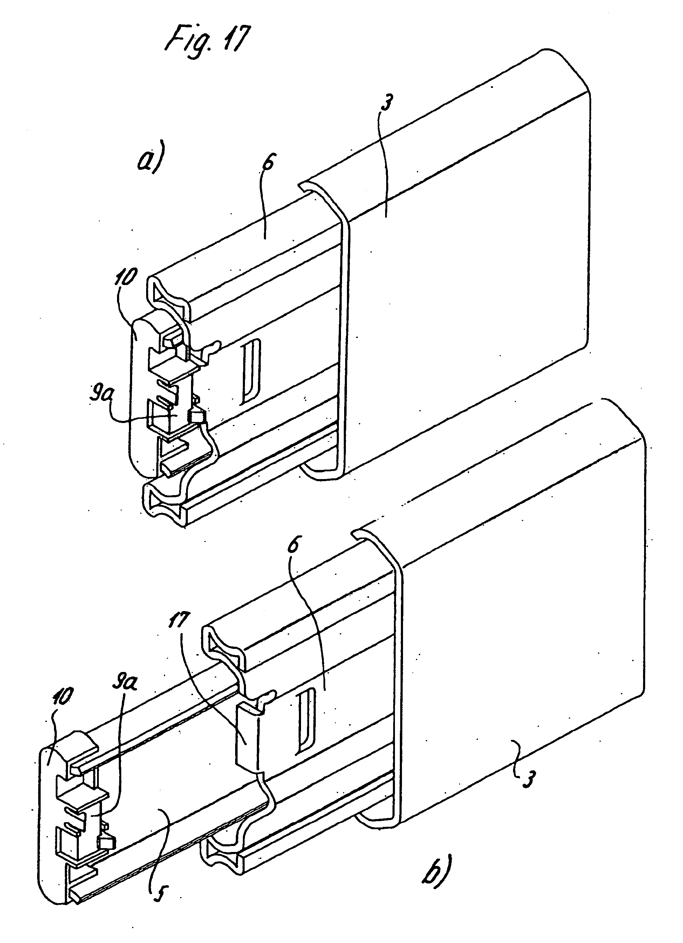

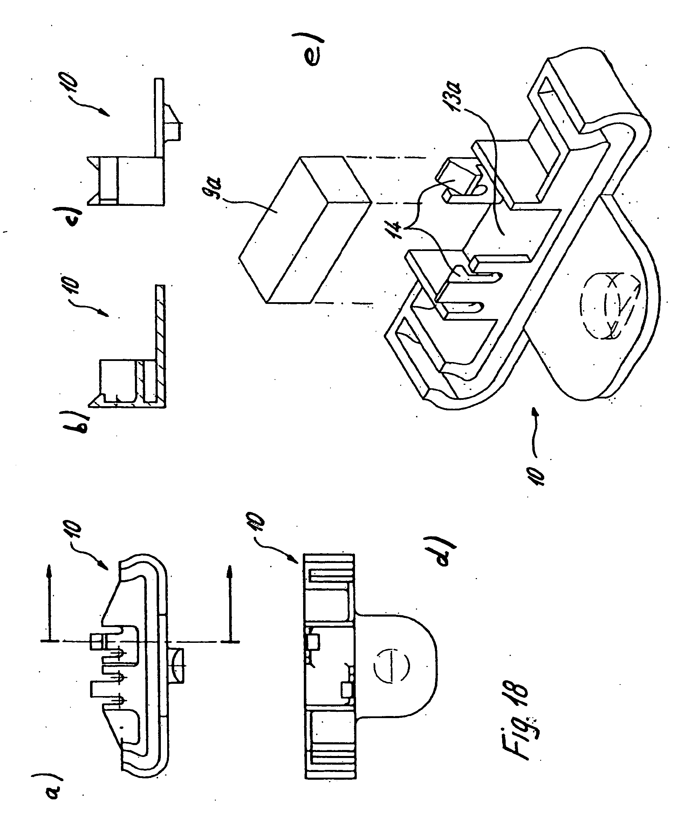

Die Figuren 15 bis 18 zeigen, dass die bislang beschriebene Art der Kopplung zwischen Mittelschienen 6 und Auszugsschienen 5 einer Teleskopführungsschiene 2 auch realisierbar ist bei einfachen Teleskopführungsschienen 2 für beispielsweise Schubkästen. Hierbei wird die Korpusschiene 3 an einer Seiten- oder Zwischenwand eines Möbelkorpus befestigt und die Auszugsschiene 5 wird mit einer Schubkasten-Seitenzarge fest verbunden. Am vorderen stirnseitigen Ende der Mittelschiene 6 ist ein abgewinkelter oder gegebenenfalls zusätzlich angebrachter Steg 17 vorgesehen, der mit einem in diesem Falle quaderförmigen Permanentmagneten 9a zusammenwirken kann. Entsprechend ist der Magnethalter 10 in seinem mittleren Bereich mit einer der Quaderform des Permanentmagneten 9a angepassten Aufnahmekammer 13a ausgestattet. Zur Fixierung des Permanentmagneten 9a in dieser Aufnahmekammer 13a sind wiederum Rastnasen 14 vorgesehen. Dies ergibt sich insbesondere aus Figur 18e. Die Befestigung des Magnethalters 10 erfolgt auch hier in vorteilhafter Weise in Form einer Rast- bzw. Klipsverbindung.

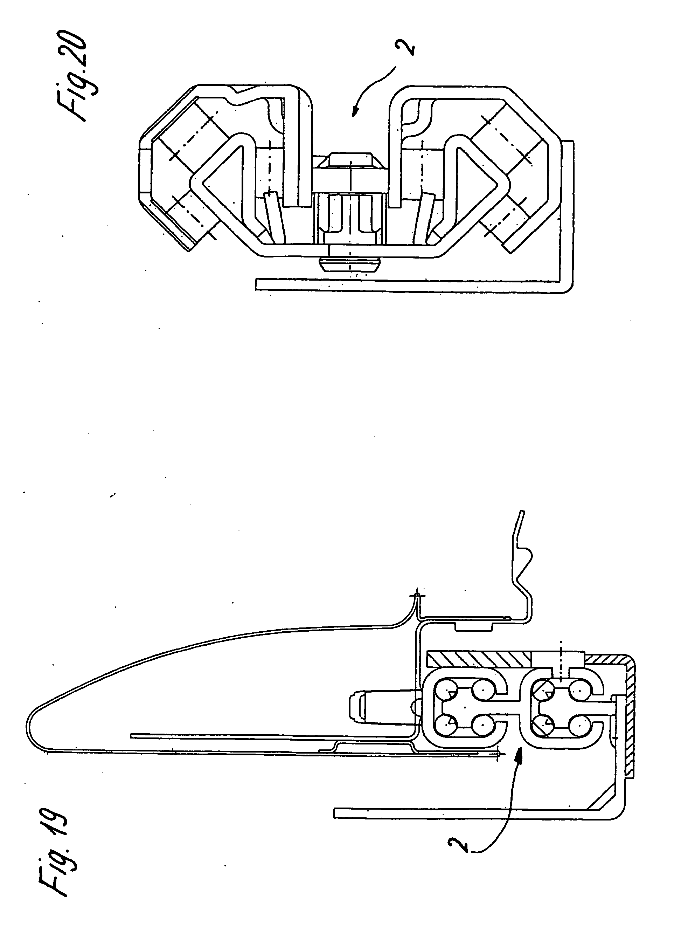

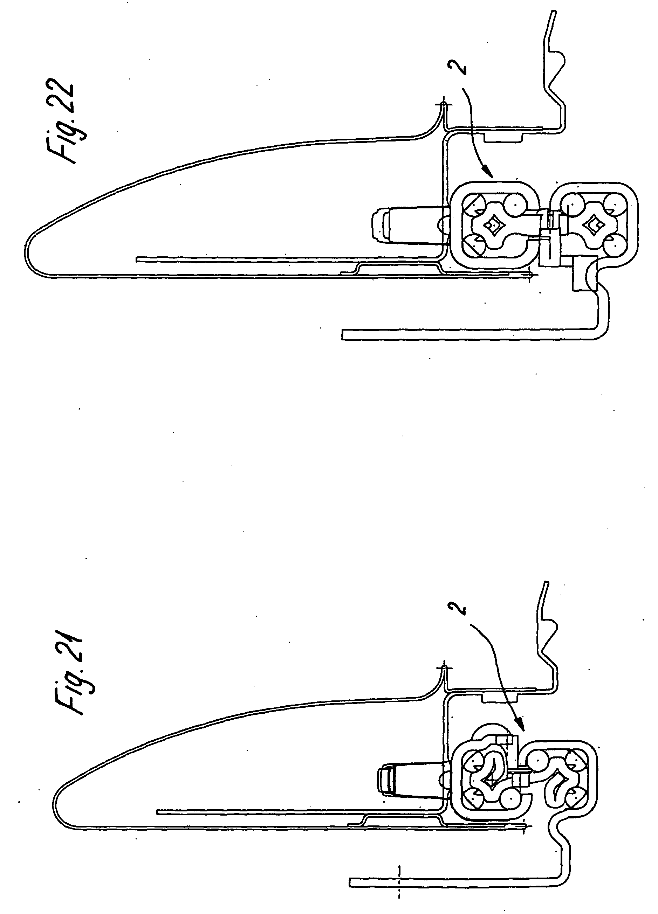

Die Figuren 19 bis 22 zeigen schließlich noch Teleskopführungsschienen 2, die aufgrund ihrer Querschnittsform ebenfalls hervorragend dafür geeignet sind, mit Kopplungseinrichtungen analog der vorhergehend beschriebenen Ausführungsbeispiele ausgestattet zu werden.

Die vorstehend beschriebenen Ausführungsbeispiele gehen von dreigliedrigen Führungsschienen aus (Korpusschiene, Mittelschiene, Innenschiene).

Die beschriebene Art der Kopplung/Steuerung von Führungsschienengliedern ist natürlich auch anwendbar, wenn die Führungsschienen mehr als drei Schienenglieder aufweisen.

Entweder wird dann unter den Führungsschienengliedern eine Auswahl getroffen, welche Schienen mit den Magneten gekoppelt werden oder durch unterschiedlich starke Magnete wird ein Zwangsablauf in der Reihenfolge aller Schienen bewirkt, indem beispielsweise die erstauslaufende Schiene mit einem "schwachen" Magneten zusammenwirkt und die letztauslaufende Schiene mit einem "starken" Magneten, während die Mittelschienen mit "mittelstarken" Magneten gekoppelt werden können. Das heißt, eine gezielte Ablaufsteuerung in einer gewünschten Reihenfolge ist bei mehr als drei Führungsschienengliedern durch den gezielten Einsatz von Magneten mit unterschiedlicher, z. B. gestufter Haltekraft möglich.

Eine Stufung der Magnet-Haltekraft ist natürlich auch über die Zahl der pro Führungsschienenglied eingesetzten Magnete denkbar.

## Patentansprüche

1. Teleskopführungsschiene (2) für Möbelauszüge, umfassend eine an einem Möbelkorpus festlegbare Korpusschiene (3), eine auszugsseitig festlegbare Auszugsschiene (5) und mindestens eine zwischen Korpusschiene (3) und Auszugsschiene (5) angeordnete Mittelschiene (6), wobei die Auszugsschiene (5) mit der mindestens einen Mittelschiene (6) bis zur deren maximalen oder nahezu maximalen Verschiebeweg gegenüber der Korpusschiene (3) gekoppelt ist, **dadurch gekennzeichnet, dass** zur Kopplung der mindestens einen Mittelschiene (6) mit der Auszugsschiene (5) an einer der Schienen (5, 6) mindestens ein Permanentmagnet (9, 9a) befestigt ist, der bis zur maximalen oder nahezu maximalen Auszugsposition der Mittelschiene (6) an einem aus einem magnetisierbaren Material bestehenden Gegenlager der anderen Schiene (5, 6) anliegt.

2. Teleskopführungsschiene nach Anspruch 1, **dadurch gekennzeichnet, dass** das Gegenlager für den oder die Permanentmagneten (9, 9a) die Stirnseite der jeweilig anderen Schiene (5, 6) ist.

3. Teleskopführungsschiene nach Anspruch 1, **dadurch gekennzeichnet, dass** als Gegenlager für den oder die Permanentmagneten (9, 9a) an der jeweils betreffenden Schiene (5, 6) ein jeweils aus der betreffenden Schiene (5, 6) herausgeprägter oder separat angebrachter Steg (15, 17) vorgesehen ist.

4. Teleskopführungsschiene nach einem der vorhergehenden Ansprüche, **dadurch gekennzeichnet, dass** der oder die Permanentmagneten (9) von einem Magnethalter (10) aufgenommen sind, der mit einer oder mehreren Aufnahmekammern (13, 13a) versehen ist, in welchen der Permanetmagnet oder die Permanentmagneten (9, 9a) verrastet gesichert sind.

5. Teleskopführungsschiene nach einem der vorhergehenden Ansprüche, **dadurch gekennzeichnet, dass** der oder die Permanentmagneten (9, 9a), die an einer der Schienen (5, 6) befestigt sind, an stirnseitigen Gegenlagern der jeweils anderen Schiene (6, 5) anliegen.

6. Teleskopführungsschiene nach einem der Ansprüche 1 bis 4, **dadurch gekennzeichnet, dass** die Permanentmagnete (9, 9a), die an einer der Schienen (5, 6) befestigt sind, an im mittleren oder hinteren Bereich der jeweils anderen Schiene (6, 5) vorgesehenen Gegenlagern anliegen.

7. Teleskopführungsschiene nach einem der vorhergehenden Ansprüche, **dadurch gekennzeichnet, dass** die das Gegenlager für den oder die Permanentmagneten (9, 9a) bildende Schiene (5, 6) aus einem magnetisierbaren Material hergestellt ist.

8. Teleskopführungsschiene nach einem der Ansprüche 1 bis 6, **dadurch gekennzeichnet, dass** die die Gegenlager für die Permanentmagneten (9, 9a) tragende Schiene (5, 6) aus einem nicht magnetisierbaren Material gefertigt und im Bereich der Gegenlager mit einer Auflage aus magnetisierbaren Material ausgestattet ist.

9. Teleskopführungsschiene nach einem der vorhergehenden Ansprüche, **dadurch gekennzeichnet, dass** die Permanentmagneten (9) und entsprechend die Aufnahmekammern (13) des Magnethalters (10) einen zylindrischen Querschnitt aufweisen.

10. Teleskopführungsschiene nach einem der Ansprüche 1 bis 8, **dadurch gekennzeichnet, dass** die Permanentmagneten (9a) und entsprechend die Aufnahmekammer (13a) quaderförmig ausgebildet sind.

11. Teleskopführungsschiene nach einem der vorhergehenden Ansprüche, **dadurch gekennzeichnet, dass** zur Kopplung der Mittelschiene (6) mit der Auszugschiene (5) jeweils zwei Permanentmagnete (9, 9a) vorgesehen sind.

12. Teleskopführungsschiene nach einem der vorhergehenden Ansprüche, **dadurch gekennzeichnet, dass** die Magnethalterung (10) unmittelbar an der Auszugsschiene (5) oder der Mittelschiene (6) angeschlossen ist.

13. Teleskopführungsschiene nach einem der Ansprüche 1 bis 10, **dadurch gekennzeichnet, dass** die Magnethalterung (10) an einem eine Auszugsschiene (5) tragenden U-Profil (8) befestigt ist.

## Claims

1. Telescopic guide rail (2) for pull-out furniture components, comprising a basic-structure rail (3), which can be secured on a basic furniture structure, a pull-out rail (5), which can be secured on the pull-out component, and at least one centre rail (6), which is arranged between the basic-structure rail (3) and pull-out rail (5), the pull-out rail (5) being coupled to the at least one centre rail (6) until the maximum, or more or less maximum, displacement distance in relation to the basic-structure rail (3) has been reached, **characterized in that,** for the purpose of coupling the at least one centre rail (6) to the pull-out rail (5), at least one permanent magnet (9, 9a) is fastened on one of the rails (5, 6) and, up to the maximum, or more or less maximum, pull-out position of the centre rail (6), this permanent magnet butts against an abutment, consisting of a magnetizable material, of the other rail (5, 6).

2. Telescopic guide rail according to Claim 1, **characterized in that** the abutment for the permanent magnet or magnets (9, 9a) is the end side of the respectively other rail (5, 6).

3. Telescopic guide rail according to Claim 1, **characterized in that** the abutment provided for the permanent magnet or magnets (9, 9a) on the respectively relevant rail (5, 6) is a crosspiece (15, 17) which is stamped out of the relevant rail (5, 6) or is fitted separately.

4. Telescopic guide rail according to one of the preceding claims, **characterized in that** the permanent magnet or magnets (9) is or are accommodated by a magnet holder (10) which is provided with one or more accommodating chambers (13, 13a) in which the permanent magnet or the permanent magnets (9, 9a) is or are secured by latching action.

5. Telescopic guide rail according to one of the preceding claims, **characterized in that** the permanent magnet or magnets (9, 9a), which is or are fastened on one of the rails (5, 6), butts or butt against end abutments of the respectively other rail (6, 5).

6. Telescopic guide rail according to one of claims 1 to 4, **characterized in that** the permanent magnets (9, 9a), which are fastened on one of the rails (5, 6), butt against abutments provided in the central or rear region of the respectively other rail (6, 5).

7. Telescopic guide rail according to one of the preceding claims, **characterized in that** the rail (5, 6) which forms the abutment for the permanent magnet or magnets (9, 9a) is produced from a magnetizable material.

8. Telescopic guide rail according to one of Claims 1 to 6, **characterized in that** the rail (5, 6) which bears the abutments for the permanent magnets (9, 9a) is produced from a non-magnetizable material and, in the region of the abutments, is provided with a support made of magnetizable material.

9. Telescopic guide rail according to one of the preceding claims, **characterized in that** the permanent magnets (9) and, correspondingly, the accommodating chambers (13) of the magnet holder (10) have a cylindrical cross section.

10. Telescopic guide rail according to one of Claims 1 to 8, **characterized in that** the permanent magnets (9a) and, correspondingly, the accommodating chamber (13a) are of cuboidal design.

11. Telescopic guide rail according to one of the preceding claims, **characterized in that** in each case two permanent magnets (9, 9a) are provided for the purpose of coupling the centre rail (6) to the pull-out rail (5).

12. Telescopic guide rail according to one of the preceding claims, **characterized in that** the magnet holder (10) is connected directly to the pull-out rail (5) or the centre rail (6).

13. Telescopic guide rail according to one of Claims 1 to 10, **characterized in that** the magnet holder (10) is fastened on a U-shaped profile (8) which bears a pull-out rail (5).

## Revendications

1. Rail de guidage télescopique (2) pour des tiroirs de meuble, comportant un rail de meuble (3), apte à être fixé contre le corps de meuble, un rail de tiroir (5), apte à être fixé au tiroir, et au moins un rail central (6) disposé entre le rail de meuble (3) et le rail de tiroir (5), ledit rail de tiroir (5) étant couplé avec ledit au moins un rail central (6) jusqu'à la distance de déplacement maximum ou sensiblement maximum de ce dernier par rapport au rail de meuble (3), **caractérisé en ce que** pour coupler ledit au moins un rail central (6) avec le rail de tiroir (5), au moins un aimant permanent (9, 9a) est fixé sur l'un des rails (5, 6), lequel, jusqu'à la position d'extraction maximale ou sensiblement maximale du rail central (6), est en appui contre une butée, réalisée en matériau magnétisable, de l'autre rail (5, 6).

2. Rail de guidage télescopique selon la revendication 1, **caractérisé en ce que** la butée pour le ou les aimants permanents (9, 9a) est la face frontale de l'autre rail (5, 6) respectif.

3. Rail de guidage télescopique selon la revendication 1, **caractérisé en ce que** pour former la butée pour le ou les aimants permanents (9, 9a) sur l'autre rail (5, 6) respectif, il est prévu une nervure (15, 17) emboutie dans le rail (5, 6) concerné ou montée séparément sur celui-ci.

4. Rail de guidage télescopique selon l'une quelconque des revendications précédentes, **caractérisé en ce que** le ou les aimants permanents (9) sont logés dans un support d'aimant (10), qui est muni d'un ou de plusieurs logements (13, 13a) dans lesquels sont immobilisés par blocage l'aimant permanent ou les aimants permanents (9, 9a).

5. Rail de guidage télescopique selon l'une quelconque des revendications précédentes, **caractérisé en ce que** le ou les aimants permanents (9, 9a), qui sont fixés contre l'un des rails (5, 6), sont en appui contre des butées frontales de l'autre rail (6, 5) respectif.

6. Rail de guidage télescopique selon l'une quelconque des revendications 1 à 4, **caractérisé en ce que** les aimants permanents (9, 9a) qui sont fixés contre l'un des rails (5, 6), sont en appui contre des butées prévues dans la zone centrale ou arrière de l'autre rail (6, 5) respectif.

7. Rail de guidage télescopique selon l'une quelconque des revendications précédentes, **caractérisé en ce que** le rail (5, 6) formant la butée pour le ou les aimants permanents (9, 9a) est réalisé dans un matériau magnétisable.

8. Rail de guidage télescopique selon l'une quelconque des revendications 1 à 6, **caractérisé en ce que** le rail (5, 6) portant la butée pour les aimants permanents (9, 9a) est réalisé dans un matériau non magnétisable et, dans la zone de la butée, est muni d'un support en matériau magnétisable.

9. Rail de guidage télescopique selon l'une quelconque des revendications précédentes, **caractérisé en ce que** les aimants permanents (9) et, de manière correspondante, les logements (13) du support d'aimant (10) ont une section cylindrique.

10. Rail de guidage télescopique selon l'une quelconque des revendications 1 à 8, **caractérisé en ce que** les aimants permanents (9a) et, de manière correspondante, les logements (13a) sont réalisés avec une forme parallélépipédique.

11. Rail de guidage télescopique selon l'une quelconque des revendications précédentes, **caractérisé en ce que** deux aimants permanents (9, 9a) sont prévus dans chaque cas pour coupler le rail central (6) avec le rail de tiroir (5).

12. Rail de guidage télescopique selon l'une quelconque des revendications précédentes, **caractérisé en ce que** le support d'aimant (10) est assemblé directement au rail de tiroir (5) ou au rail central (6).

13. Rail de guidage télescopique selon l'une quelconque des revendications 1 à 10, **caractérisé en ce que** le support d'aimant (10) est fixé contre un profilé en U (8) supportant un rail de tiroir (5).
